# EUROPÄISCHE PATENTSCHRIFT

(11) **EP 1 947 545 B1**
(45) Veröffentlichungstag und Bekanntmachung des Hinweises auf die Patenterteilung: **19.05.2010**
(21) Anmeldenummer: 07015591.6
(22) Anmeldetag: 08.08.2007
(51) Int. Cl.: H02J 3/00, G05F 1/16, H02M 5/12

(54) **Schaltungsanordnung zur Versorgung von veränderlichen Lasten aus drei Phasen**
Power supply circuit for changing loads with three phases
Circuit d'alimentation pour des charges variables avec trois phases

(30) Priorität: 18.01.2007 DE 202007001083 U
(43) Veröffentlichungstag der Anmeldung: 23.07.2008
(73) Patentinhaber: AEG Power Solutions B.V., 1161 AH Zwanenburg (NL)
(72) Erfinder: Vollmar, Wilfried, 59494 Soest (DE); Liese, Michael-Harro, 59494 Soest (DE)
(74) Vertreter: Graefe, Jörg

(56) Entgegenhaltungen:
- DE-U1- 20 318 061
- DE-U1-202004 014 812
- GB-A- 1 184 801
- US-A- 5 736 838

## Beschreibung

Die Erfindung betrifft eine Schaltungsanordnung zur Versorgung von Lasten, insbesondere veränderlichen Lasten, aus drei Phasen einer elektrischen Energieversorgung.

Aus den Gebrauchsmusterschriften mit den Veröffentlichungsnummern DE 20 2004 014 812 U1, DE 20 2004 004 655 U1 und DE 203 18 061 U1 sind Schaltungsanordnungen bekannt, mit denen Lasten aus einer Phase einer elektrischen Energieversorgung versorgt werden können. Bei den Lasten kann es sich dabei um sich im Betrieb sich verändernde Lasten handeln. Die in den genannten Gebrauchsmusterschriften beschriebenen Schaltungsanordnungen sind insbesondere für Silizium-Abscheidanlagen zum Züchten von Siliziumkristallen vorgesehen. Die Lasten werden dabei von den zu züchtenden Kristallen gebildet. Während des Betriebs wachsen die Kristalle und verändern dadurch ihren elektrischen Widerstand.

Für eine besondere Anlage sollen nun deutlich mehr Kristalle gleichzeitig in einem Reaktor gezüchtet werden können. Dafür sind höhere Leistungen erforderlich, weshalb eine dreiphasige Versorgung mit elektrischer Energie sinnvoll ist.

Eine Besonderheit des Reaktors ist, dass die Lasten, die durch die entstehenden Siliziumkristalle gebildet werden, in drei konzentrischen Kreisen angeordnet sind. Jeder dieser konzentrischen Kreise umfasst eine Gruppe von Siliziumkristallen, d. h. eine Gruppe von Lasten. Die Anzahl der Lasten der den äußeren Ring bildenden Lastengruppe ist dabei größer als die Anzahl der Lasten des inneren Rings.

Die Spannungskurve beziehungsweise Stromkurve, die beim Züchten der Siliziumkristalle durchfahren werden, soll für die Lasten einer Lastengruppe gleich sein. Zwischen den Lastengruppen können jedoch Unterschiede bei den einzuhaltenden der Strom- beziehungsweise Spannungskurven vorliegen. Es ist daher sinnvoll, den Strom- beziehungsweise Spannungsverlauf während des Züchtens der Siliziumkristalle jeder Lastengruppe mit einem eigenen Regelkreis zu regeln.

Dagegen ist es ebenso sinnvoll, wenn eine gleiche Anzahl von Lasten an die drei Phasen der elektrischen Energieversorgung angeschlossen sind. Der Fachmann steht also vor der Anforderung, eine Schaltungsanordnung vorzuschlagen, die einerseits eine Regelung der drei unterschiedlich großen Lastgruppen ermöglicht und andererseits eine gleichmäßige Verteilung der Lasten der drei Phasen der Energieversorgung sicherstellt.

Diese Anforderungen werden durch eine erfindungsgemäße Schaltungsanordnung mit den Merkmalen des Anspruchs 1 gelöst.

Demnach weist die erfindungsgemäße Schaltungsanordnung vier Gruppen von Anschlüssen für die Lasten auf, die nachstehend als Anschlussgruppen bezeichnet sind. Die Schaltungsanordnung ist zur Versorgung der Anschlüsse der zweiten Anschlussgruppe aus der ersten Phase geeignet und eingerichtet. Die Schaltungsanordnung ist ferner zur Versorgung der Anschlüsse der vierten Anschlussgruppe aus einer zweiten Phase geeignet und eingerichtet. Außerdem ist die Schaltungsanordnung zur Versorgung der Anschlüsse der ersten Anschlussgruppe und der dritten Anschlussgruppe aus einer dritten Phase geeignet und eingerichtet.

Ferner ist eine erfindungsgemäße Schaltungsanordnung zum Regeln der Spannung der vier Anschlussgruppen geeignet und eingerichtet, wobei die erste Anschlussgruppe einem ersten Regelkreis zugeordnet ist, die zweite Anschlussgruppe einem zweiten Regelkreis zugeordnet ist und die dritte und die vierte Anschlussgruppe einem gemeinsamen dritten Regelkreis zugeordnet sind.

Der erste Regelkreis umfasst einen ersten Regler und eine erste Gruppe von steuerbaren Schaltmitteln zum Einstellen der Spannung als Stellglieder des ersten Regelkreises, wobei diese erste Gruppe von steuerbaren Schaltmitteln als erste Schaltmittelgruppe bezeichnet ist.

Der zweite Regelkreis umfasst einen zweiten Regler und eine zweite Gruppe von steuerbaren Schaltmitteln, die zum Einstellen der Spannung als Stellglied des zweiten Regelkreises vorgesehen ist. Die zweite Gruppe von steuerbaren Schaltmitteln wird nachfolgend als zweite Schaltmittelgruppe bezeichnet.

Der dritte Regelkreis umfasst schließlich einen dritten Regler und eine dritte Gruppe von steuerbaren Schaltmitteln zum Einstellen der Spannung als Stellglied des dritten Regelkreises, die nachstehend als dritte Schaltmittelgruppe bezeichnet ist.

Gemäß der Erfindung können die steuerbaren Schaltmittel Thyristoren sein. Natürlich ist es denkbar, dass auch andere geeignete Schaltmittel verwendet werden, mit denen eine Spannung eingestellt werden kann.

Gemäß der Erfindung kann die erste Schaltmittelgruppe zum Wechsel zwischen einer parallelen Versorgung und einer seriellen Versorgung der an die erste Anschlussgruppe anschließbaren Lasten geeignet und eingerichtet sein. Auch die zweite Schaltmittelgruppe kann zum Wechsel zwischen einer parallelen Versorgung und einer seriellen Versorgung der an die zweite Anschlussgruppe anschließbaren Lasten geeignet und eingerichtet sein. Schließlich kann auch die dritte Schaltmittelgruppe zum Wechsel zwischen einer parallel Versorgung und einer seriellen Versorgung der an die dritte und/oder die vierte Anschlussgruppe anschließbaren Lasten geeignet und eingerichtet sein.

Der Wechsel zwischen einer parallelen Versorgung und einer seriellen Versorgung der an die Anschlussgruppen anschließbaren Lasten ist für das Züchten von Siliziumkristallen von Vorteil, da in einer ersten Phase eine hohe Spannung an den Lasten und in einer zweiten Phase ein hoher Strom durch die Lasten günstig für das Wachstum der sich verändernden Lasten bzw. Siliziumkristalle ist.

Die Schaltmittel der ersten Schaltmittelgruppe können bei einer erfindungsgemäßen Schaltungsanordnung zum Schalten von Strömen aus der dritten Phase geeignet und eingerichtet sein. Die Schaltmittel der zweiten Schaltmittelgruppe können zum Schalten von Strömen aus der ersten Phase geeignet und eingerichtet sein. Eine erste Untergruppe von Schaltmitteln der dritten Schaltmittelgruppe kann zum Schalten von Strömen aus der zweiten Phase geeignet und eingerichtet sein und eine zweite Untergruppe von Schaltmitteln der dritten Schaltmittelgruppe kann zum Schalten von Strömen aus der dritten Phase geeignet und eingerichtet sein.

Eine erfindungsgemäße Schaltungsanordnung kann so ausgestaltet sein, dass die geringste, durch die Schaltmittel der ersten Schaltmittelgruppe oder der zweiten Untergruppe der dritten Schaltmittelgruppe einstellbare Spannung halb so groß ist wie die durch die Schaltmittel der zweiten Gruppe und der ersten Untergruppe der dritten Schaltmittelgruppe einstellbare Spannung.

Sind an eine erfindungsgemäße Schaltungsanordnung veränderliche Lasten angeschlossen, kann man eine erfindungsgemäße Anordnung erhalten, bei der eine erste Lastengruppe an die Anschlüsse der ersten Anschlussgruppe angeschlossen sind, eine zweite Lastengruppe an die Anschlüsse der zweiten Anschlussgruppe angeschlossen ist und eine dritte Lastengruppe an die Anschlüsse der dritten Anschlussgruppe und die Anschlüsse der vierten Anschlussgruppe angeschlossen ist.

Der Widerstand der an die zweite und die vierte Anschlussgruppe angeschlossenen Lasten ist vorteilhaft gleich groß. Ebenso ist der Widerstand der an die erste und die dritte Anschlussgruppe angeschlossenen Lasten vorteilhaft gleich groß. Der Gesamtwiderstand der an die erste und die dritte Anschlussgruppe angeschlossenen Lasten kann dabei vorteilhaft genauso groß sein wie der Widerstand, der an die zweite oder die vierte Anschlussgruppe angeschlossenen Lasten.

Zwei erfindungsgemäße Ausführungsbeispiele für Schaltungsanordnungen zur Versorgung von veränderlichen Lasten aus drei Phasen und zwei Anordnungen aus solchen Schaltungsanordnungen und daran angeschlossener Lasten sind anhand der Zeichnungen näher beschrieben. Es zeigt
- Fig. 1: ein erstes Ausführungsbeispiel für eine Schaltungsanordnung und eine Anordnung aus einer solchen Schaltungsanordnung und daran angeschlossener Lasten und
- Fig. 2: ein zweites Ausführungsbeispiel für eine Schaltungsanordnung und eine Anordnung aus einer solchen Schaltungsanordnung und daran angeschlossener Lasten.

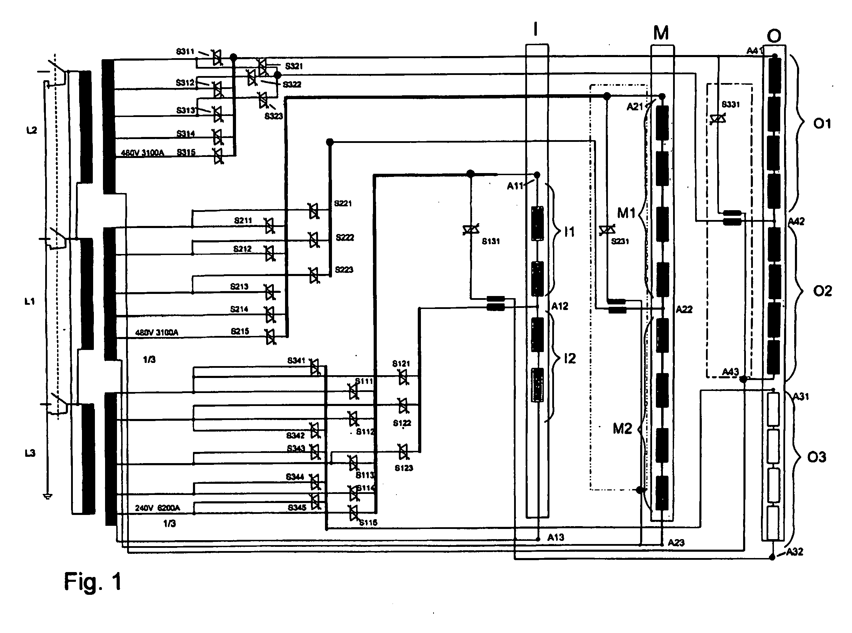

Die Schaltungsanordnung gemäß Fig. 1 weist drei Transformatoren T1, T2, T3 auf, die mit ihrer Primärseite an ein dreiphasiges Spannungsversorgungsnetz mit einer ersten Phase L1, einer zweiten Phase L2 und einer dritten Phase L3 angeschlossen sind. Die Sekundärseite der Transformatoren T1, T2, T3 weisen jeweils mehrere Abzapfungen auf, so dass unterschiedliche Spannungen sekundärseitig an den Transformatoren abgegriffen werden können. Während die höchste abzugreifende Spannung bei allen drei Transformatoren T1, T2, T3 gleich groß ist, ist die niedrigste sekundärseitig abgreifbare Spannung beim ersten Transformator T1 und beim zweiten Transformator T2 doppelt so groß wie beim dritten Transformator T3.

An die Sekundärseite der Transformatoren T1, T2, T3 sind verschiedene Schaltmittel S111 bis S345 angeschlossen, über welche drei Gruppen I, N, O von Lasten I1, I2; M1, M2; O1, O2, O3 angeschlossen sind. Die Lasten werden aus den drei Phasen der L1, L2, L3 der Spannungsversorgung gleichmäßig mit elektrischer Energie versorgt.

Die Lasten I1 bis O3 sind auf die drei Phasen L1, L2, L3 so verteilt, dass diese gleichmäßig belastet werden. Andererseits ist es erforderlich, dass die Lasten I1 bis O3 gruppenweise geregelt werden. Dieses führt zu der erfindungsgemäßen Schaltungsanordnung.

Bei der erfindungsgemäßen Schaltungsanordnung werden die Lasten I1, I2 der ersten Lastengruppe I, die an die Schaltungsanordnung über Anschlüsse A11, A12, A13 einer ersten Anschlussgruppe an die Schaltungsanordnung angeschlossen sind, aus der dritten Phase L3 versorgt. Die Lasten M1, M2 der zweiten Lastengruppe M, die über die Anschlüsse A21, A22, A23 einer zweiten Anschlussgruppe mit der Schaltungsanordnung verbunden sind, werden dagegen aus der ersten Phase L1 mit elektrischer Energie versorgt.

Der Gesamtwiderstand der Lasten M1, M2 der zweiten Gruppe ist dabei ungefähr doppelt so groß wie der Gesamtwiderstand der Lasten I1, I2 der ersten Gruppe I.

Die Lasten O1, O2, O3 der dritten Lastengruppe O werden zum Teil aus der zweiten Phase L2 und zum Teil aus der dritten Phase L3 versorgt. Während eine Untergruppe O3 der Lastengruppe O aus der dritten Phase L3 versorgt wird und mit der Schaltungsanordnung über einen Anschluss A31, A32 einer dritten Anschlussgruppe angeschlossen ist, wird eine Untergruppe O1, O2 der dritten Lastengruppe O aus der zweiten Phase L2 mit elektrischer Energie versorgt und ist dazu über Anschlüsse A41, A42, A43 einer vierten Anschlussgruppe mit der Schaltungsanordnung verbunden.

Es sind somit die Anschlüsse A11, A12, A13 der ersten Anschlussgruppe mit der dritten Phase L3, die Anschlüsse A21, A22, A23 der zweiten Anschlussgruppe mit der ersten Phase L1, die Anschlüsse A31, A32 der dritten Anschlussgruppe mit der dritten Phase L3 und die Anschlüsse A41, A42, A43 der vierten Anschlussgruppe der zweiten Phase L2 unter Zwischenschaltung der Schaltmittel S111 bis S345 verbunden.

Bei den Schaltmitteln S111 bis S345 handelt es sich um gesteuerte Schaltmittel, nämlich um Thyristoren, die Stellglieder von insgesamt drei Regelkreisen sind, mit denen die Spannung beziehungsweise die Leistung der drei Lastengruppen I, M, O geregelt werden kann. Die zur Ansteuerung der Stellglieder beziehungsweise der gesteuerten Schaltmittel S111 bis S345 vorgesehenen Regler sind in der Fig. 1 nicht dargestellt. Auch sind die für die Vervollständigung der drei Regelkreise notwendigen Sensoren in der Fig. 1 nicht bezeichnet.

Die gesteuerten Schaltmittel S111 bis S345 sind in drei Gruppen angeordnet, wobei eine erste Schaltmittelgruppe von Schaltmitteln S111 bis S131 der ersten Lastengruppe I zugeordnet ist. Eine zweite Schaltmittelgruppe von Schaltmitteln S211 bis S231 ist der zweiten Lastengruppe M zugeordnet. Die dritte verbleibende Schaltmittelgruppe von Schaltmitteln S311 bis S345 ist der dritten Lastengruppe O zugeordnet. Mit den Schaltmittelgruppen ist das Einstellen der Spannung und somit der Leistung der Lasten der ihr jeweils zugeordneten Lastengruppe I, M, O möglich.

Die erste Schaltmittelgruppe macht es möglich, dass die beiden Lasten I1, I2 der ersten Lastengruppe I parallel oder in Reihe geschaltet mit elektrischer Energie versorgt werden können. Sofern die elektrischen Lasten parallel geschaltet mit elektrischer Energie versorgt werden sollen, ist eines der Schaltmittel S121, S122 oder S123 durchgeschaltet, so dass aus einer der Anzapfungen der Sekundärseite des dritten Transformators T3 Strom durch die Schaltmittel S121, S122, S123 in den Anschluss A12 der Schaltungsanordnung fließen kann. Der Strom, der in den Anschluss A12 hineinfließt verzweigt sich und verteilt sich gleichmäßig auf die beiden Lasten E1, E2. Während der Strom über die Last I2 und den Anschluss A13 unmittelbar zum sekundärseitigen Bezugspotential des dritten Transformators T3 abfließt, fließt der Strom durch die Last I1 über den Anschluss A11 und über ein durchgeschaltetes Schaltmittel S131 zum Bezugspotential des dritten Transformators T3 ab. Die verbleibenden Schaltmittel S111, S112, S113, S114, S115 sperren im Parallelbetrieb der Lasten I1, I2.

Durch die Auswahl des Schaltmittels S121, S122, S123 als stromführendes Schaltmittel kann aufgrund der Verbindung der Schaltmittel mit unterschiedlichen Anzapfungen die Spannung am Anschluss A12 eingestellt werden. Jedes der Schaltmittel deckt dabei einen Spannungsbereich ab, der einerseits durch die Wahl eines Phasenanschnittswinkels, d. h. durch die Wahl des Einschaltzeitpunkts des Schaltmittels während einer Periode beziehungsweise des Zündzeitpunkts des Thyristors und andererseits durch die Spannung an der Anzapfung vorgegeben ist.

Sollen die Lasten I1, I2 der ersten Lastengruppe I in Reihe geschaltet mit elektrischer Energie versorgt werden, wird die erste Lastengruppe I über den Anschluss A11 und einem der Thyristoren S111, S112, S113, S114 oder S115 mit einer der Anzapfungen der sekundärseitigen Spule des dritten Transformators T3 verbunden. Die übrigen Schaltmittel S121, S122, S123 und das Schaltmittel S131 sperren im Serienbetrieb der ersten Lastengruppe I. Der Strom fließt über einen der stromführenden Thyristoren S111 bis S115, den Anschluss A11, durch die Last I1, durch die Last I2 und über den Anschluss A13 zum Bezugspunkt der Sekundärseite des dritten Transformators T3. Je nach dem, welche Spannung am Anschluss A11 eingestellt werden soll, ist das eine oder das andere Schaltmittel S111 bis S115 stromführend. Mit jedem Schaltmittel kann ein bestimmter durch die Anzapfung und die möglichen Phasenanschnittswinkel vorgegebenen Spannungsbereich abgedeckt werden.

Die Versorgung der Lasten M1, M2 der zweiten Lastengruppe M erfolgt analog wie die Versorgung der ersten Lastengruppe I. Auch die Lasten M1, M2 der zweiten Lastengruppe M können sowohl im Parallelbetrieb als auch im Serienbetrieb mit elektrischer Energie versorgt werden. Im Falle des Parallelbetriebs erfolgt die Versorgung über den Anschluss A22. Im Fall des Reinserienbetriebs über den Anschluss A21.

Der Anschluss A22 ist über eine Stromschiene mit Schaltmitteln S221, S222, S223 verbunden, ihrerseits jeweils mit einer sekundärseitigen Anzapfung des ersten Transformators T1 verbunden sind. Jeweils eines der Schaltmittel S221, S222, S223 ist stromführend und je nach Auswahl des Schaltmittels und nach Einstellung des Phasenanschnittswinkels kann die Spannung am Anschluss A22 vorgegeben werden. Der Strom fließt dann vom Anschluss A22 sowohl in die Last M1 als auch in die Last M2. Der durch die Last M2 fließende Strom wird über den Anschluss A23 unmittelbar zum sekundärseitigen Bezugspotential des ersten Transformators T1 geführt, während der Strom durch die Last M1 über den Anschluss A21 und über das Schaltmittel 231, welches im Parallelbetrieb der Lasten M1, M2 stromführend ist, zum sekundärseitigen Bezugspotential des Transformators T1 geführt ist.

Im Serienbetrieb der Lasten M1, M2 ist eines der gesteuerten Schaltmittel S211, S212, S213, S214, S215 stromführend, um den Strom von einer der Anzapfungen der Sekundärseite des ersten Transformators T1 zum Anschluss A21 zu ermöglichen. Vom Anschluss A21 fließt der Strom durch die Last M1, durch die Last M2 und über den Anschluss A23 zum sekundärseitigen Bezugspotential des ersten Transformators T1. Die Schaltmittel S221, S222, S223 und das Schaltmittel S231 sperren im Serienbetrieb.

Ebenso analog erfolgt die elektrische Energieversorgung der Lasten O1 und O2 der Lastengruppe O. Im Parallelbetrieb der Lasten O1, O2 ist eines der Schaltmittel S321, S322, S323 und das Schaltmittel S331 durchgeschaltet, um einen Stromfluss von einem der sekundärseitigen Anzapfungen des zweiten Transformators T2 über den Anschluss A42, von dort aus einerseits durch die Last O1 über den Anschluss A41 und das durchgeschaltete Schaltmittel S331 und andererseits durch die Last O2 über den Anschluss A23 zum sekundärseitigen Bezugspotential des zweiten Transformators T2 zu ermöglichen.

Im Serienbetrieb wird dagegen die Untergruppe, die aus den Lasten O1, O2 der dritten Lastengruppe O gebildet ist, über eines der Schaltmittel S311, S312, S313, S314 oder S315 mit Spannung aus einer der sekundärseitigen Anzapfungen des zweiten Transformators T2 versorgt. Die Schaltmittel S321, S322, S323 und das Schaltmittel S331 sperren im Serienbetrieb der Untergruppe, die aus den Lasten O1, O2 der dritten Lastengruppe O gebildet ist.

Die Last O3 der dritten Lastengruppe O wird über den dritten Transformator T3 aus der dritten Phase L3 mit elektrischer Energie versorgt. Zur Versorgung der Last O3 ist eines der Schaltmittel S341, S342, S343, S344 oder S345 stromführend. Je nach Wahl des Schaltmittels, das jeweils mit einer sekundärseitigen Anzapfung des Transformators T3 verbunden ist, kann die Spannung am Anschluss A31, über welchen die Last O3 angeschlossen ist, mit elektrischer Energie versorgt werden. Die Spannung ist dabei durch die Wahl des Schaltmittels und durch die Wahl des Phasenanschnittswinkels vorgegeben, der von einem nicht dargestellten Regler eingestellt wird.

Jeder Schaltmittelgruppe der Schaltungsanordnung ist ein Regler zugeordnet, welcher die Phasenabschnittwinkel der einzelnen Schaltmittel S111 bis S345 vorgibt. Während die Schaltmittel S111 bis 131 der ersten Schaltmittelgruppe und die Schaltmittel S211 bis231 der zweiten Schaltmittelgruppe jeweils nur aus einer Phase L3 bzw. L1 mit Spannung versorgt werden, werden die Schaltmittel S311 bis345 der dritten Schaltmittelgruppe zur Versorgung der dritten Lastengruppe O aus zwei Phasen, nämlich aus der zweiten Phase L2 und der dritten Phase L3 mit Spannung versorgt. Dennoch werden die Schaltmittel S311 bis S345 der dritten Schaltmittelgruppe von einem Regler angesteuert und gehören zusammen mit diesem Regler und zugeordneten Sensoren zu einem dritten Regelkreis.

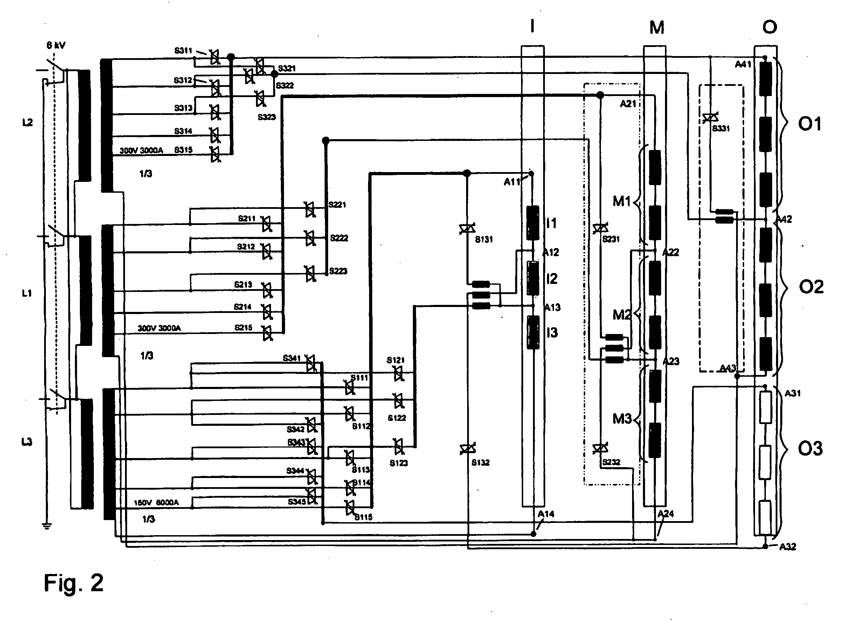

Das in Fig. 2 dargestellte zweite Ausführungsbeispiel für eine erfindungsgemäße Schaltungsanordnung und eine Anordnung aus der erfindungsgemäßen Schaltungsanordnung und daran angeschlossener Lasten weist viele Gemeinsamkeiten mit dem ersten Ausführungsbeispiel auf. Es sind daher gleiche beziehungsweise gleichwirkende Bauelemente, Bauteile und Anschlüsse mit gleichen Bezeichnungen versehen. Nachfolgend wird im Wesentlichen auf die Unterschiede zwischen den beiden Ausführungsbeispielen eingegangen.

Der wesentliche Unterschied zwischen den beiden erfindungsgemäßen Schaltungsanordnungen ist, dass die Schaltungsanordnung gemäß Fig. 2 für den Anschluss von jeweils drei Lasten an der ersten Anschlussgruppe und an der zweiten Anschlussgruppe vorgesehen sind. Die erste Gruppe I umfasst daher drei Lasten I1, I2, I3 und die zweite Lastengruppe M umfasst drei Lasten M1, M2 und M3. Sowohl die drei Lasten der ersten Lastengruppe I als auch die drei Lasten M1, M2, M3 der zwei Lastengruppe M können parallel als auch seriell geschaltet mit elektrischer Energie aus der dritten Phase L3 beziehungsweise aus der ersten Phase L1 versorgt werden.

Damit eine parallele Versorgung der drei Lasten der ersten Lastengruppe I und der zweiten Lastengruppe M möglich ist, ist jeweils ein weiterer Anschluss A14 bzw. A24 in der ersten Anschlussgruppe und in der zweiten Anschlussgruppe, jeweils ein weiteres Schaltmittel S132 bzw. S232 in der ersten Schaltmittelgruppe und der zweiten Schaltmittelgruppe und eine geänderte Leitungsführung notwendig. Die Art und Weise der Leitungsführung beziehungsweise des Einsatzes der zusätzlichen Schaltmittel ist dabei grundsätzlich aus der Druckschrift mit der Veröffentlichungsnummer DE 203 18 061 U1 bekannt, auf die verwiesen wird.

Im Falle des Parallelbetriebs sind sowohl die Schaltmittel S131, S231 als auch die Schaltmittel S132 beziehungsweise S232 durchgeschaltet. Der Strom fließt dann einem der durchgeschalteten Schalter S131, S122, S123 beziehungsweise S221, S222, S223 einerseits zum Anschluss A13 bzw. A23 zwischen der Last I2 und der Last I3, beziehungsweise der Last M2 und der Last M3 als auch über das Schaltmittel S131 beziehungsweise S231 und den Anschluss A11 bzw. A21 zur Last 11 beziehungsweise zur Last M1. Nachdem die Ströme durch die Lasten I1, I2, beziehungsweise M1, M2 geflossen sind, fließen sie vom Anschluss A12 über das Schaltmittel S132 zum sekundären Bezugspotential des dritten Transformators T3 beziehungsweise vom Anschluss A22 über das Schaltmittel S232 zum sekundären Bezugspotential des Transformators T1. Ebenso fließen die Ströme aus den Lasten I3 beziehungsweise M3 über die Anschlüsse A14 beziehungsweise A24 zum sekundären Bezugspotential der Transformatoren T3 beziehungsweise T1.

## Patentansprüche

1. Schaltungsanordnung zur Versorgung von insbesondere veränderlichen Lasten (I1, I2,, M1, M2, 01, 02, 03) aus drei Phasen (L1, L2, L3) umfassend folgende Merkmale:
- die Schaltungsanordnung weist vier Gruppen von Anschlüssen (A11, A12, A13, A14; A21 , A22, A23, A24; A31, A32; A41, A42, A43) für die Lasten (I1, I2, M1, M2, 01, 02, 03) auf, die nachstehend als Anschlussgruppen bezeichnet sind;
- die Schaltungsanordnung ist zur Versorgung der Anschlüsse (A21, A22, A23, A24) der zweiten Anschlussgruppe aus der ersten Phase (L1) eingerichtet;
- die Schaltungsanordnung ist zur Versorgung der Anschlüsse (A41, A42, A43) der vierten Anschlussgruppe aus der zweiten Phase (L2) eingerichtet;
- die Schaltungsanordnung ist zur Versorgung der Anschlüsse (A11, A12, A13) der ersten Anschlussgruppe und der dritten Anschlussgruppe (A31, A32) aus einer dritten Phase (L3) eingerichtet;
- die Schaltungsanordnung ist zum Regeln der Spannung der vier Anschlussgruppen eingerichtet
- wobei
- der ersten Anschlussgruppe ein erster Regelkreis zugeordnet ist und der erste Regelkreis einen ersten Regler und eine erste Gruppe von steuerbaren Schaltmittel (S111 bis S132) zum Einstellen der Spannung als Stellglied umfasst, die nachstehend als erste Schaltmittelgruppe bezeichnet ist,
- der zweiten Anschlussgruppe ein zweiter Regelkreis zugeordnet ist und der zweite Regelkreis einen zweiten Regler und eine zweite Gruppe von steuerbaren Schaltmittel (S211 bis S231) zum Einstellen der Spannung als Stellglied umfasst, die nachstehend als zweite Schaltmittelgruppe bezeichnet ist,
- der dritten Anschlussgruppe und der vierten Anschlussgruppe ein gemeinsamer dritter Regelkreis zugeordnet ist und der dritte Regelkreis einen dritten Regler und eine dritte Gruppe von steuerbaren Schaltmittel (S311 bis S345) zum Einstellen der Spannung als Stellglied umfasst, die nachstehend als dritte Schaltmittelgruppe bezeichnet ist.

2. Schaltungsanordnung nach Anspruch 1, **dadurch gekennzeichnet, dass** die steuerbaren Schaltmittel (S111 bis S345) Thyristoren sind.

3. Schaltungsanordnung nach Anspruch 2, **dadurch gekennzeichnet, dass** die erste Schaltmittelgruppe (S111 bis 132) zum Wechsel zwischen einer parallelen Versorgung und einer seriellen Versorgung der an die erste Anschlussgruppe anschließbaren Lasten (11, 12) eingerichtet ist.

4. Schaltungsanordnung nach einem der Ansprüche 2 bis 3, **dadurch gekennzeichnet, dass** die zweite Schaltmittelgruppe (S211 bis S232) zum Wechsel zwischen einer parallelen Versorgung und einer seriellen Versorgung der an die zweite Anschlussgruppe anschließbaren Lasten (M1, M2) eingerichtet ist.

5. Schaltungsanordnung nach einem der Ansprüche 2 bis 4, **dadurch gekennzeichnet, dass** die dritte Schaltmittelgruppe (S311 bis S345) zum Wechsel zwischen einer parallelen Versorgung und einer seriellen Versorgung der an die dritte und die vierte Anschlussgruppe anschließbaren Lasten (01, 02, 03) eingerichtet ist.

6. Schaltungsanordnung nach einem der Ansprüche 2 bis 5, **dadurch gekennzeichnet, dass** die Schaltmittel der ersten Schaltmittelgruppe zum Schalten von Strömen aus der dritten Phase (L3) eingerichtet sind.

7. Schaltungsanordnung nach einem der Ansprüche 2 bis 6, **dadurch gekennzeichnet, dass** die Schaltmittel der zweiten Schaltmittelgruppe zum Schalten von Strömen aus der ersten Phase (L1) eingerichtet sind.

8. Schaltungsanordnung nach einem der Ansprüche 2 bis 7, **dadurch gekennzeichnet, dass** eine erste Untergruppe von Schaltmitteln (S31 bis S331) der dritten Schaltmittelgruppe zum Schalten von Strömen aus der zweiten Phase (L2) eingerichtet ist.

9. Schaltungsanordnung nach einem der Ansprüche 2 bis 7, **dadurch gekennzeichnet, dass** eine zweite Untergruppe von Schaltmitteln (S341 bis S345) der dritten Schaltmittelgruppe zum Schalten von Strömen aus der dritten Phase (L3) eingerichtet ist.

10. Schaltungsanordnung nach Anspruch 9, **dadurch gekennzeichnet, dass** die geringste, durch die Schaltmittel der ersten Schaltmittelgruppe (S111 bis S132) oder der zweiten Untergruppe (S341 bis S345) der dritten Schaltmittelgruppe einstellbare Spannung halb so groß ist wie die durch die Schaltmittel der zweiten Gruppe (S211 bis S232) und der ersten Untergruppe (S31 bis S331) der dritten Schaltmittelgruppe einstellbare Spannung.

11. Anordnung aus einer Schaltungsanordnung nach einem der Ansprüche 1 bis 10 und veränderlichen Lasten (11, 12, M1, M2, O1, O2, O3), wobei
- eine erste Gruppe (11, 12) der Lasten (11, 12, M1, M2, O1, O2, O3) an die Anschlüsse (A11, A12, A13, A14) der ersten Anschlussgruppe angeschlossen ist,
- eine zweite Gruppe (M1, M2) der Lasten (11, 12, M1, M2, O1, O2, O3) an die Anschlüsse (A21, A22, A23, A24) der zweiten Anschlussgruppe angeschlossen ist und
- eine dritte Gruppe (O1, O2, O3) der Lasten (11, 12, M1, M2, O1, O2, O3) an die Anschlüsse (A31, A32) der dritten Anschlussgruppe und die Anschlüsse (A41, A42, A43) der vierten Anschlussgruppe angeschlossen ist.

12. Anordnung nach Anspruch 11, **dadurch gekennzeichnet, dass** der Widerstand der an die zweite und die vierte Anschlussgruppe angeschlossenen Lasten (M1, M2; O1, O2) gleich groß ist.

13. Anordnung nach Anspruch 12, **dadurch gekennzeichnet, dass** der Widerstand der an die erste und die dritte Anschlussgruppe angeschlossenen Lasten (I1, I2; O3) gleich groß ist.

14. Anordnung nach Anspruch 12 und 13, **dadurch gekennzeichnet, dass** der Gesamtwiderstand der an die erste und die dritte Anschlussgruppe angeschlossenen Lasten (I1, I2; O3) genauso groß ist wie der Widerstand der an die zweite oder die vierte Anschlussgruppe angeschlossenen Lasten (M1, M2; O1, O2).

## Claims

1. Circuit arrangement for supplying, in particular, variable loads (I1, I2, M1, M2, O1, O2, O3) from three phases (L1, L2, L3), having the following features:
- the circuit arrangement has four groups of connections (A11, A12, A13, A14; A21, A22, A23, A24; A31, A32; A41, A42, A43) for the loads (I1, 12, M1, M2, O1, O2, O3), and these are referred to in the following text as connection groups;
- the circuit arrangement is designed to supply the connections (A21, A22, A23, A24) of the second connection group from the first phase (L1);
- the circuit arrangement is designed to supply the connections (A41, A42, A43) of the fourth connection group from the second phase (L2);
- the circuit arrangement is designed to supply the connections (A11, A12, A13) of the first connection group and of the third connection group (A31, A32) from a third phase (L3);
- the circuit arrangement is designed to regulate the voltage of the four connection groups
- wherein
- the first connection group is associated with a first control loop, and the first control loop has a first regulator and a first group of controllable switching means (S111 to S132) for adjusting the voltage as an actuating element, and this is referred to in the following text as the first switching means groups,
- the second connection group is associated with a second control loop, and the second control loop has a second regulator and a second group of controllable switching means (S211 to S231) for adjusting the voltage as an actuating element, and this is referred to in the following text as the second switching means group,
- the third connection group and the fourth connection group are associated with a common third control loop, and the third control loop has a third regulator and a third group a controllable switching means (S311 to S345) for adjusting the voltage as an actuating element, and this is referred to in the following text as the third switching means group.

2. Circuit arrangement according to Claim 1,
**characterized in that** the controllable switching means (S111 to S345) are thyristors.

3. Circuit arrangement according to Claim 2,
**characterized in that** the first switching means group (S111 to S132) is designed to change between a parallel supply and a series supply to the loads (I1, 12) which can be connected to the first connection group.

4. Circuit arrangement according to one of Claims 2 to 3, **characterized in that** the second switching means group (S211 to S232) is designed to change between a parallel supply and a series supply to the loads (M1, M2) which can be connected to the second connection group.

5. Circuit arrangement according to one of Claims 2 to 4, **characterized in that** the third switching means group (S311 to S345) is designed to change between a parallel supply and a series supply to the loads (O1, O2, O3) which can be connected to the third and the fourth connection groups.

6. Circuit arrangement according to one of Claims 2 to 5, **characterized in that** the switching means in the first switching means group are designed to switch currents from the third phase (L3).

7. Circuit arrangement according to one of Claims 2 to 6, **characterized in that** the switching means and the second switching means group are designed to switch currents from the first phase (L1).

8. Circuit arrangement according to one of Claims 2 to 7, **characterized in that** a first subgroup of switching means (S311 to S331) in the third switching means group is designed to switch currents from the second phase (L2).

9. Circuit arrangement according to one of Claims 2 to 7, **characterized in that** a second subgroup of switching means (S341 to S345) in the third switching means group is designed to switch currents from the third phase (L3).

10. Circuit arrangement according to Claim 9, **characterized in that** the lowest voltage which can be set by the switching means in the first switching means group (S111 to S132) or the second subgroup (S341 to S345) of the third switching means group is half the magnitude of the voltage which can be set by the switching means in the second group (S211 to S232) and the first subgroup (S311 to S331) of the third switching means group.

11. Arrangement comprising a circuit arrangement according to one of Claims 1 to 10 and variable loads (I1, I2, M1, M2, O1, O2, O3), wherein
- a first group (I1, I2) of the loads (I1, I2, M1, M2, O1, O2, O3) is connected to the connections (A11, A12, A13, A14) of the first connection group,
- a second group (M1, M2) of the loads (I1, I2, M1 M2, O1, O2, O3) is connected to the connections (A21, A22, A23, A24) of the second connection group, and
- a third group (O1, O2, O3) of the loads (I1, I2, M1, M2, O1, O2, O3) is connected to the connections (A31, A32) of the third connection group and to the connections (A41, A42, A43) of the fourth connection group.

12. Arrangement according to Claim 11, **characterized in that** the resistance of the loads (M1, M2; O1, O2) which are connected to the second and the fourth connection groups is of the same magnitude.

13. Arrangement according to Claim 12, **characterized in that** the resistance of the loads (I1, I2; O3) which are connected to the first and the third connection groups is of the same magnitude.

14. Arrangement according to Claims 12 and 13, **characterized in that** the total resistance of the loads (I1, I2; O3) which are connected to the first and the third connection groups is of precisely the same magnitude as the resistance of the loads (M1, M2; 01, 02) which are connected to the second or the fourth connection groups.

## Revendications

1. Agencement de circuits destiné à alimenter des charges, notamment différentes, (I1, I2... M1, M2, O1, O2, O3) à partir de trois phases (L1, L2, L3) et possédant les caractéristiques suivantes
- l'agencement de circuits comporte quatre groupes de bornes (A11, A12, A13, A14 ; A21, A22, A23, A24 ; A31, A32 ; A41, A42, A43) destinés aux charges (I1, I2... M1, M2, O1, O2, O3), lesquels sont désignés dans la suite par groupe de bornes ;
- l'agencement de circuits est destiné à alimenter les bornes (A21, A22, A23, A24) du deuxième groupe de bornes à partir de la première phase (L1) ;
- l'agencement du circuits est destiné à alimenter les bornes (A41, A42, A43) du quatrième groupe de bornes à partir de la deuxième phase (L2) ;
- l'agencement de circuits est destiné à alimenter les bornes (A11, A12, A13) du premier groupe de bornes et du troisième groupe de bornes (A31, A32) à partir d'une troisième phase (L3) ;
- l'agencement de circuits est destiné à régler la tension des quatre groupes de bornes
dans lequel
- un premier circuit de réglage est associé au premier groupe de bornes et le premier circuit de réglage comporte un premier élément de réglage et comme actionneur un premier groupe de dispositifs de commutation commandés (S111 à S132) destinés à régler la tension, lequel est désigné dans la suite par premier groupe de dispositifs de commutation,
- un deuxième circuit de réglage est associé au deuxième groupe de bornes et le deuxième circuit de réglage comporte un deuxième élément de réglage et comme actionneur un deuxième groupe de dispositifs de commutation commandés (S211 à S231) destinés à régler la tension, lequel est désigné dans la suite par deuxième groupe de dispositifs de commutation.
- un troisième circuit de réglage commun est associé au troisième groupe de bornes et au quatrième groupe de bornes et le troisième circuit de réglage comporte un troisième élément de réglage et comme actionneur un troisième groupe de dispositifs de commutation commandés (S211 à S231) destinés à régler la tension, lequel est désigné dans la suite par troisième groupe de dispositifs de commutation,

2. Agencement de circuits selon la revendication 1, **caractérisé en ce que** les dispositifs de commutation commandés (S111 à S345) sont des thyristors.

3. Agencement de circuits selon la revendication 2, **caractérisé en ce que** le premier groupe de dispositifs de commutation (S111 à S132) est destiné au passage entre une alimentation parallèle et une alimentation série des charges (I1, I2) pouvant être raccordées au premier groupe de bornes.

4. Agencement de circuits selon l'une des revendications 2 à 3, **caractérisé en ce que** le deuxième groupe de dispositifs de commutation (S211 à S232) est destiné au passage entre une alimentation parallèle et une alimentation série des charges (M1, M2) pouvant être raccordées au deuxième groupe de bornes.

5. Agencement de circuits selon l'une des revendications 2 à 4, **caractérisé en ce que** le troisième groupe de dispositifs de commutation (S311 à S345) est destiné au passage entre une alimentation parallèle et une alimentation série des charges (O1, 02, 03) pouvant être raccordées aux troisième et quatrième groupes de bornes.

6. Agencement de circuits selon l'une des revendications 2 à 5, **caractérisé en ce que** les dispositifs de commutation du premier groupe de dispositifs de commutation sont destinés à commuter des courants venant de la troisième phase (L3).

7. Agencement de circuits selon l'une des revendications 2 à 6, **caractérisé en ce que** les dispositifs de commutation du deuxième groupe de dispositifs de commutation sont destinés à commuter des courants venant de la première phase (L1).

8. Agencement de circuits selon l'une des revendications 2 à 7, **caractérisé en ce qu'**un premier sous-groupe de dispositifs de commutation (S311 à S331) du troisième groupe de dispositifs de commutation est destiné à commuter des courants venant de la deuxième phase (L2).

9. Agencement de circuits selon l'une des revendications 2 à 7, **caractérisé en ce qu'**un deuxième sous-groupe de dispositifs de commutation (S341 à S345) du troisième groupe de dispositifs de commutation est destiné à commuter des courants venant de la troisième phase (L3).

10. Agencement de circuits selon la revendication 9, **caractérisé en ce que** la plus faible tension qui peut être réglée par les dispositifs de commutation du premier groupe de dispositifs de commutation (S111 à S132) ou du deuxième sous-groupe (S341 à S345) du troisième groupe de dispositifs de commutation est égale à la moitié de la tension qui peut être réglée par les dispositifs de commutation du deuxième groupe (S211 à S232) et du premier sous-groupe (S311 à S331) du troisième groupe de dispositifs de commutation.

11. Structure constituée d'un agencement de circuits selon l'une des revendications 1 à 10 et de différentes charges (I1, I2... M1, M2, O1, O2, O3) , dans laquelle
- un premier groupe (I1, I2) de charges (I1, 12... M1, M2, O1, O2, O3) est raccordé aux bornes (A11, A12, A13, A14) du premier groupe de bornes,
- un deuxième groupe (M1, M2) de charges (I1, I2... M1, M2, 01, 02, 03) est raccordé aux bornes (A21, A22, A23, A24) du deuxième groupe de bornes et
- un troisième groupe (O1, O2, O3) de charges (I1, I2... M1, M2, O1, O2, O3) est raccordé aux bornes (A31, A32) du troisième groupe de bornes et aux bornes (A41, A42, A43) du quatrième groupe de bornes.

12. Structure selon la revendication 11, **caractérisée en ce que** la résistance des charges (M1, M2 ; O1, O2) raccordées aux deuxième et quatrième groupes de bornes est de même valeur.

13. Structure selon la revendication 12, **caractérisée en ce que** la résistance des charges (Il ; I2 ; O3) raccordées aux premier et troisième groupes de bornes est de même valeur.

14. Structure selon la revendication 12 et 13, **caractérisée en ce que** la résistance totale des charges (I1, I2 ; O3) raccordées aux premier et troisième groupes de bornes est égale à la résistance des charges (O1, O2 ; O1, O2) raccordées au deuxième ou au quatrième groupe de bornes.
